# NEUE EUROPÄISCHE PATENTSCHRIFT

(11) **EP 2 410 276 B2**
(45) Veröffentlichungstag und Bekanntmachung des Hinweises auf die Entscheidung über den Einspruch: **16.11.2016**
(45) Hinweis auf die Patenterteilung: 26.09.2012
(21) Anmeldenummer: 11005995.3
(22) Anmeldetag: 21.07.2011
(51) Int. Cl.: F27D 99/00, F23D 1/00, C21C 5/52

(54) **VERFAHREN ZUR CHEMISCHEN UMSETZUNG EINES BRENNSTOFFS MIT SAUERSTOFFHALTIGEM GAS MITTELS EINES AUSSENMISCHENDEN BRENNERS**
METHOD FOR THE CHEMICAL REACTION OF A FUEL WITH OXYGEN-CONTAINING GAS BY MEANS OF AN EXTERNALLY MIXING BURNER
PROCÉDÉ POUR LA CONVERSATION CHIMIQUE D'UN COMBUSTIBLE AVEC UN GAZ CONTENANT DE L'OXYGÈNE AU MOYEN D'UN BRÛLEUR À MÉLANGE EXTERNE

(30) Priorität: 22.07.2010 DE 102010031927; 23.10.2010 EP 10013905
(43) Veröffentlichungstag der Anmeldung: 25.01.2012
(73) Patentinhaber: Linde Aktiengesellschaft, 80331 München (DE)
(72) Erfinder: Niehoff, Thomas, Dr., 85229 Markt Indersdorf (DE)
(74) Vertreter: Gellner, Bernd

(56) Entgegenhaltungen:
- AT-B- 411 928
- DE-B- 1 151 266

## Beschreibung

Die Erfindung bezieht sich auf ein Verfahren zur chemischen Umsetzung eines Brennstoffs mit einem sauerstoffhaltigen Gas mittels eines außenmischenden Brenners, wobei der Brennstoff über den Brenner zugeführt und mit einem den Brennstoffstrom umgebenden ersten Strom eines sauerstoffhaltigen Gases umgesetzt wird.

Bei der Verbrennung eines Brenngases mit einem sauerstoffhaltigen Gas in außenmischenden Brennern, d.h. in Brennern, in denen das Brenngas und das sauerstoffhaltige Gas nicht vorgemischt, sondern getrennt in eine Mischzone geführt und dort gezündet werden, ist es wichtig, eine intensive Durchmischung des sauerstoffhaltigen Gases und des Brenngases zu erreichen, um die chemische Verbrennungsreaktion zwischen diesen Gasen zu beschleunigen und eine stabile Flamme zu erhalten. Dies gilt insbesondere dann, wenn niederkalorische Brennstoffe eingesetzt werden.

So treten bei Brennern, die mit festen oder flüssigen Brennstoffen betrieben werden, häufig Probleme mit der Flammenstabilität und dem Ausbrand, d.h. der vollständigen Verbrennung, des Brennstoffs auf. Die Flamme löst sich ab oder ist instabil und ermöglicht so keinen sicheren Betrieb. Je nach Betriebsweise ändert sich die Flammencharakteristik erheblich. Eine sichere Einstellung der Flamme bei unterschiedlichen Brennerleistungen und Brennstoffen ist kaum möglich.

Aufgabe vorliegender Erfindung ist es daher, ein Verfahren zur chemischen Umsetzung von Gasen zu entwickeln, wobei die oben genannten Probleme hinsichtlich der Flammenstabilität und Ausbrand möglichst vermieden werden.

Diese Aufgabe wird durch ein Verfahren gemäß Anspruch 1 gelöst.

Als Oxidationsmittel wird ein sauerstoffhaltiges Gas verwendet, vorzugsweise Luft, mit Sauerstoff angereicherte Luft, ein Gemisch aus Sauerstoff und Kohlendioxid oder ein Gemisch aus Sauerstoff, Kohlendioxid und Luft. In einer Ausführungsform der Erfindung wird als Oxidationsmittel ein Kohlendioxidstrom mit Sauerstoff versetzt, so dass dessen Sauerstoffgehalt zwischen 15 vol-% und 25 vol-% liegt.

Besondere Bedeutung erlangt das erfindungsgemäße Verfahren dadurch, dass der Sauerstoffgehalt einfach veränderten Brennstoffbedingungen (Heizwert, Zusammensetzung, Feuchte) angepasst werden kann.

Der Brenner ist für Brennstoffe aller Art - feste, flüssige oder gasförmige Brennstoffe - geeignet. Insbesondere eignet sich der Brenner zur Verbrennung niederkalorischer Brennstoffe, insbesondere von Feststoffen, wie zum Beispiel Braunkohle, Steinkohle, Holz oder Holzspäne, und aus Biomasse gewonnenen Brennstoffen und Biokraftstoffen, wie zum Beispiel Pflanzenöl, Biodiesel, Bioethanol oder Biomethan. Auch mit Gemischen aus den oben genannten Brennstoffen, beispielsweise mit Kohle und Holz, kann der Brenner betrieben werden. Der Brennstoff kann in diesem Fall als Gemisch sowohl über eine erste Brennstoffzuführung als auch über eine zweite Brennstoffzuführung zugeführt werden. Es ist ebenso möglich, eine Brennstoffsorte über die eine Brennstoffzuführung und eine andere Brennstoffsorte über die andere Brennstoffzuführung bereitzustellen.

Unter dem Begriff "niederkalorische Brennstoffe" werden Brennstoffe verstanden, die einen geringeren Heizwert als Erdgas besitzen. Beispiele für niederkalorische Brennstoffe sind gasförmige Brennstoffe mit einem Heizwert von weniger als 10 kWh/m³, weniger als 8 kWh/m³ oder weniger als 5 kWh/m³ oder feste oder flüssige Brennstoffe mit einem Heizwert unter 30 MJ/kg.

Mit einer ersten und einer zweiten Oxidationsmittelzuführung sind Mittel zur Versorgung mit einem sauerstoffhaltigen Gas, insbesondere reinem Sauerstoff, Luft, Kohlendioxid oder einem Gemisch aus zwei oder mehr dieser Stoffe, verbunden. An die erste und die zweite Brennstoffzuführung sind jeweils Mittel zur Versorgung mit einem Brennstoff, entweder gasförmig, flüssig oder fest, angeschlossen. Die Sauerstofflanzen sind mit einer Sauerstoffquelle verbunden, welche ein Gas mit einem Sauerstoffgehalt von mehr als 21 vol-%, ein Gas mit einem Sauerstoffgehalt von mehr als 75 vol-%, ein Gas mit einem Sauerstoffgehalt von mehr als 90 vol-% oder technisch reinen Sauerstoff liefert.

Erfindungsgemäß ist die Brennstoffzufuhr zweigeteilt: Ein Teil des Brennstoffs tritt über die zentral im Brennerkopf angeordnete Austrittsöffnung der ersten Brennstoffzuführung aus dem Brenner aus. Ein zweiter Teil des Brennstoffs wird über eine zweite Brennstoffzuführung zugeführt, deren Austrittsöffnung die Austrittsöffnung der ersten Brennstoffzuführung ringförmig umgibt. Die Aufteilung des Brennstoffs auf die beiden Brennstoffzuführungen erfolgt vorzugsweise so, dass über die erste Brennstoffzuführung mehr Brennstoff zugeführt wird als über die zweite Brennstoffzuführung. Besonders bevorzugt beträgt das Verhältnis der über die erste Brennstoffzuführung zugeführten Brennstoffmenge zu der über die zweite Brennstoffzuführung zugeführten Brennstoffmenge zwischen 4 : 1 und 1,3 : 1, besonders bevorzugt zwischen 2,5: 1 und 1,5 : 1.

Zwischen den Austrittsöffnungen der beiden Brennstoffzuführungen befindet sich die ebenfalls ringförmige Austrittsöffnung einer ersten Oxidationsmittelzuführung, über die ein Oxidationsmittel, welches mit dem Brennstoff reagiert und diesen chemisch umsetzt, zugeführt wird. Eine zweite Oxidationsmittelzuführung umgibt die zweite Brennstoffzuführung. Die Austrittsöffnung der zweiten Oxidationsmittelzuführung ist ringförmig um die Austrittsöffnung der zweiten Brennstoffzuführung angeordnet. Von Vorteil wird über die zweite Oxidationsmittelzuführung mehr Oxidationsmittel zugeführt als über die erste Oxidationsmittelzuführung, besonders bevorzugt das 1,2- bis 2-fache der über die erste Oxidationsmittelzuführung zugeführten Oxidationsmittelmenge.

Die erste und zweite Brennstoffzuführung sowie die erste und zweite Oxidationsmittelzuführung sind vorzugsweise koaxial zueinander angeordnet. Anstelle der parallelen Führung der Brennstoff- und Oxidationsmittelströme können der Brennstoff und das Oxidationsmittel auch unter einem bestimmten Winkel zusammengeführt werden, um die Vermischung der Ströme zu verbessern.

Zusätzlich sind mehrere Sauerstofflanzen vorgesehen, deren Austrittsöffnungen einen geringeren radialen Abstand von der Brennermitte besitzen als die Austrittsöffnung der zweiten Brennstoffzuführung. Die Sauerstofflanzen sind in dem Bereich innerhalb der die zweite Brennstoffzuführung radial nach innen begrenzenden Wandung angeordnet. Vorzugsweise befinden sich die Sauerstofflanzen innerhalb des die erste Oxidationsmittelzuführung bildenden Ringkanals und besonders bevorzugt an dessen radial inneren Rand oder an dessen radial äußeren Rand. Die Sauerstofflanzen können aber auch innerhalb der zentralen ersten Brennstoffzuführung, vorzugsweise an deren äußerem Rand, vorgesehen sein.

Von Vorteil sind die Sauerstofflanzen parallel zur ersten Oxidationsmittelzuführung ausgerichtet. Über die Sauerstofflanzen zugeführter Sauerstoff strömt vorzugsweise parallel zu dem aus der ersten Brennstoffzuführung austretenden Brennstoff.

Über die Sauerstofflanzen wird ein sauerstoffhaltiges Gas, vorzugsweise mit einer Sauerstoffgehalt von mehr als 90 vol-%, besonders bevorzugt mehr als 95 vol-%, besonders bevorzugt technisch reiner Sauerstoff, zugeführt.

Durch die erfindungsgemäße Zweiteilung der Brennstoffzufuhr und die Aufteilung der Oxidationsmittelzufuhr in zwei Ströme und die Möglichkeit, zusätzlichen Sauerstoff über die Sauerstofflanzen zuzuführen, werden die Verbrennungssteuerung und die Flammenstabilität wesentlich verbessert. Zusätzlicher Sauerstoff kann je nach Bedarf über die Sauerstofflanzen zugegeben werden. Wird beispielsweise über die erste Oxidationsmittelzuführung ein stark kohlendioxidhaltiges Gemisch aus Sauerstoff und Kohlendioxid zugeführt, welches einen niedrigen Sauerstoffanteil von zum Beispiel weniger als 20 vol-% besitzt, so wird von Vorteil über die Sauerstofflanzen technisch reiner Sauerstoff eingedüst, um die für die Verbrennung des Brennstoffs notwendige Gesamtsauerstoffmenge bereitzustellen.

Durch die erfindungsgemäße Aufteilung des Brennstoffs auf zwei separate Zuführungen und durch die Aufteilung des Oxidationsmittels auf zwei Zuführungen und die zusätzliche Eindüsung von Sauerstoff erlaubt der Brenner die Einstellung unterschiedlicher Flammengeometrien und Flammenlängen bei verschiedenen Brennerleistungen. Die Wärmeverteilung in der Brennerflamme kann gezielt gewählt werden.

Von Vorteil weisen die zweite Brennstoffzuführung und/oder die zweite Oxidationsmittelzuführung und/oder die Sauerstofflanzen Mittel zur Erzeugung eines Dralls auf. Einem durch die zweite Brennstoffzuführung strömenden Brennstoff beziehungsweise einem durch die zweite Oxidationsmittelzuführung strömenden Gas kann so eine Drallströmung aufgezwungen werden. Ebenso wird es möglich, den über die Sauerstofflanzen zugeführten Sauerstoff zu verwirbeln.

Die zusätzliche Verwirbelung des zugeführten Brennstoffs und/oder des zugeführten Oxidationsmittels bzw. Sauerstoffs führt zu einem intensiven radialen Massenaustausch zwischen dem verwirbelten Strom und den ihm benachbarten Strömen. Diese starke Wechselwirkung zwischen den Strömen bewirkt eine intensive und schnelle Vermischung und damit eine beschleunigte Reaktion.

Die Verdrallung des zweiten Brennstoffstroms und des zweiten Oxidationsmittelstroms kann so erfolgen, dass die beiden Drallströmungen gleichsinnig oder gegensinnig ausgerichtet sind.

Eine gegensinnige Verdrallung, das heißt eine Verdrallung, bei der die Drallströmungen der beiden Ströme in dem Kontaktbereich der beiden Ströme einander entgegengerichtet sind, hat den Vorteil, dass die Ströme sehr stark miteinander vermischt werden. Die chemische Reaktion wird beschleunigt, das heißt es erfolgt eine schnelle, frühe Zündung und Verbrennung des Brennstoffs. Die Verdrallung des nach der Zusammenführung der Gasströme entstehenden Gesamtstrahles ist relativ gering, da sich durch die gegensinnige Verdrallung der Reaktionsstrahlen die beiden ursprünglichen Drallströmungen teilweise aufheben. Die entstehende Flamme weitet sich dadurch relativ wenig auf.

Es kann aber auch günstig sein, die beiden Drallströmungen so auszurichten, dass sie gleichsinnig verlaufen. In diesem Fall verstärken sich die Drallströmungen in dem Kontaktbereich der beiden Ströme, so dass eine relativ hohe Gesamtdrallzahl erreicht wird. Dies hat eine stärkere Aufweitung der Flamme zur Folge. Die Geschwindigkeit entlang der Strahlachse verkleinert sich in der Brennzone und die Verweilzeit der Reaktionspartner im Reaktionsraum erhöht sich.

Zudem kann bei geeigneter Verdrallstärke eine relativ weit von der Brennerspitze entfernte Rückströmung erzeugt werden. Diese führt zu einer Zirkulationsströmung, durch die die Gase länger in dem Reaktionsraum verbleiben und so besser umgesetzt werden. Insbesondere bei der Verbrennung relativ niederkalorischer Brennstoffe, d.h. bei einer langsam ablaufenden chemischen Reaktion, wird so eine vollständige Umsetzung des Brennstoffs mit dem Oxidationsmittel erreicht.

Die Flammentopologie ist bei einer gleichsinnigen Verdrallung besonders gut einstellbar. Axiale Länge und radiale Ausdehnung der Flamme sind wählbar und an die Reaktionsbedingungen anpassbar. Zudem ist die Vermischung der beiden Gasströme in der Nähe der Brennerspitze nicht so intensiv wie bei einer gegensinnigen Verdrallung der Strahlen, so dass die thermische Belastung der Brennerspitze gesenkt wird.

Die gleichsinnige Verdrallung hat außerdem den Vorteil, dass bei gewünschter Gesamtdrallzahl der Drall eines der beiden Ströme niedriger gewählt werden kann, als dies bei einer gegensinnigen Verdrallung möglich ist. Bei der Verdrallung eines Stromes erfährt der Strom zwangsläufig einen gewissen Druckverlust. Dieser Druckverlust muss insbesondere dann möglichst niedrig gehalten werden, wenn der betreffende Strom nur unter geringem Druck zur Verfügung steht. Unter diesen Umständen ist es vorteilhaft, wenn der unter geringerem Druck vorliegende Strom weniger verdrallt wird, der unter höherem Druck vorliegende Strom dagegen stärker verdrallt wird. Durch die gleichsinnige Verdrallung der beiden Ströme ist es dennoch möglich, die gewünschte Gesamtdrallzahl zu erzielen.

Es ist günstig, wenn die Mittel zur Erzeugung eines Dralls in der zweiten Brennstoffzuführung und / oder in der zweiten Oxidationsmittelzuführung Strömungskanäle aufweisen, die tangential gegen die Strömungsrichtung geneigt sind. Eine derartige Ausführung der Mittel zur Drallerzeugung ist leicht herstellbar. Über den Winkel der Strömungskanäle kann die Verdrallung des Stromes einfach vorgegeben werden. Die Verdrallung kann auch über entsprechend ausgerichtete Leitbleche oder Leitschaufeln in der zweiten Brennstoffzuführung bzw. in der zweiten Oxidationsmittelzuführung erzeugt werden. Diese Ausführung ist insbesondere dann vorzuziehen, wenn der durch die Verdrallung entstehende Druckverlust minimiert werden soll.

Vorzugsweise sind die Mittel zur Erzeugung eines Dralles in der zweiten Brennstoffzuführung und / oder in der zweiten Oxidationsmittelzuführung verstellbar, so dass unterschiedlich starke Drallströmungen erzeugt werden können. Durch geeignete Wahl der Drallzahl, d.h. der Stärke der Verdrallung, der beteiligten Gasströme können die Strömungsverhältnisse an die ablaufende Verbrennungsreaktion angepasst werden.

Es hat sich als günstig erwiesen, eine dritte Oxidationsmittelzuführung vorzusehen, welche als Ringkanal ausgebildet ist und deren Austrittsöffnung die zweite Oxidationsmittelzuführung ringförmig umgibt. Über die dritte Oxidationsmittelzuführung wird vorzugsweise das gleiche Oxidationsmittel zugeführt wie über die erste und die zweite Oxidationsmittelzuführung. Von Vorteil sind dies Sauerstoff, Luft, mit Sauerstoff angereicherte Luft, ein Gemisch aus Sauerstoff und Kohlendioxid, ein Gemisch aus Luft und Kohlendioxid oder ein Gemisch aus Sauerstoff, Luft und Kohlendioxid.

Durch die dritte Oxidationsmittelzuführung wird der betriebssichere Regelbereich des Brenners weiter vergrößert. Zudem können durch die verbesserte Verbrennungssteuerung die Brenneremissionen, insbesondere CO und NOₓ, gezielter beeinflusst werden. Die über die dritte Oxidationsmittelzuführung zugeführte Oxidationsmittelmenge beträgt beispielsweise das 1,5- bis 8-fache der über die erste Oxidationsmittelzuführung zugeführten Oxidationsmittelmenge.

Es ist außerdem von Vorteil, auch in der dritten Oxidationsmittelzuführung mehrere Sauerstofflanzen vorzusehen. Die Sauerstofflanzen sind innerhalb des als dritte Oxidationsmittelzuführung dienenden Ringspalts angeordnet, vorzugsweise an dessen innerem oder äußerem Rand. Über die Sauerstofflanzen wird Sauerstoff, vorzugsweise mit einer Reinheit von mehr als 90 vol-%, besonders bevorzugt mehr als 95 vol-%, besonders bevorzugt technisch reiner Sauerstoff, zugeführt.

Wie oben erwähnt, ist es in der Praxis günstig, der ersten, der zweiten und der dritten Oxidationsmittelzuführung jeweils dasselbe Oxidationsmittel zuzuführen. Zur besseren und gezielteren Steuerung der Verbrennungsreaktion kann es aber auch von Vorteil sein, nicht alle Oxidationsmittelzuführungen mit demselben Oxidationsmittel zu versorgen, sondern zumindest teilweise Oxidationsmittel unterschiedlicher Zusammensetzung zu verwenden. So kann beispielsweise der Sauerstoffgehalt des durch die erste Oxidationsmittelzuführung strömenden Oxidationsmittel höher gewählt werden als der durch die anderen beiden Oxidationsmittelzuführungen strömenden Oxidationsmittel.

Der Brenner eignet sich zur Verbrennung fester, flüssiger und gasförmiger Brennstoffe. Bei der Verwendung flüssiger Brennstoffe hat es sich bewährt, die erste Brennstoffzuführung und/oder die zweite Brennstoffzuführung mit Mitteln zur Zerstäubung eines flüssigen Brennstoffs zu versehen. Durch die Zerstäubung des Brennstoffs wird dessen Oberfläche vergrößert und damit die Reaktion des Brennstoffs mit dem Oxidationsmittel beschleunigt und intensiviert.

Vorzugsweise überschreitet die Strömungsgeschwindigkeit des über die zweite Oxidationsmittelzuführung zugeführten zweiten sauerstoffhaltigen Stroms die Strömungsgeschwindigkeit des über die zweite Brennstoffzuführung zugeführten zweiten Brennstoffstroms um mehr als 50%, vorzugsweise um mehr 75%, besonders bevorzugt beträgt die Strömungsgeschwindigkeit des zweiten sauerstoffhaltigen Stroms zwischen 90% und 120% der Strömungsgeschwindigkeit des zweiten Brennstoffstroms. Die Strömungsgeschwindigkeit des zweiten sauerstoffhaltigen Stroms beträgt das 1,5-fache bis 2,5-fache der Strömungsgeschwindigkeit des zweiten Brennstoffstroms, bevorzugt ungefähr das Doppelte der Strömungsgeschwindigkeit des zweiten Brennstoffstroms. Durch die unterschiedlichen Strömungsgeschwindigkeiten treten Scherkräfte zwischen den beiden benachbarten Strömen auf, welche zu einer verbesserten Vermischung des Brennstoffs mit dem Oxidationsmittel führen.

Die absolute Strömungsgeschwindigkeit des zweiten Brennstoffstroms beträgt vorzugsweise zwischen 20 und 50 m/s, während die Strömungsgeschwindigkeit des zweiten sauerstoffhaltigen Stroms bevorzugt zwischen 20 und 70 m/s liegt.

Die Erfindung sowie weitere Einzelheiten der Erfindung werden im Folgenden anhand von dem in der Zeichnung dargestellten Ausführungsbeispiel näher erläutert. Hierbei zeigen
- Fig. 1 -: schematisch einen Querschnitt durch einen Brennerkopf und
- Fig. 2: eine Variante des in Figur 1 dargestellten Brennerkopfes.

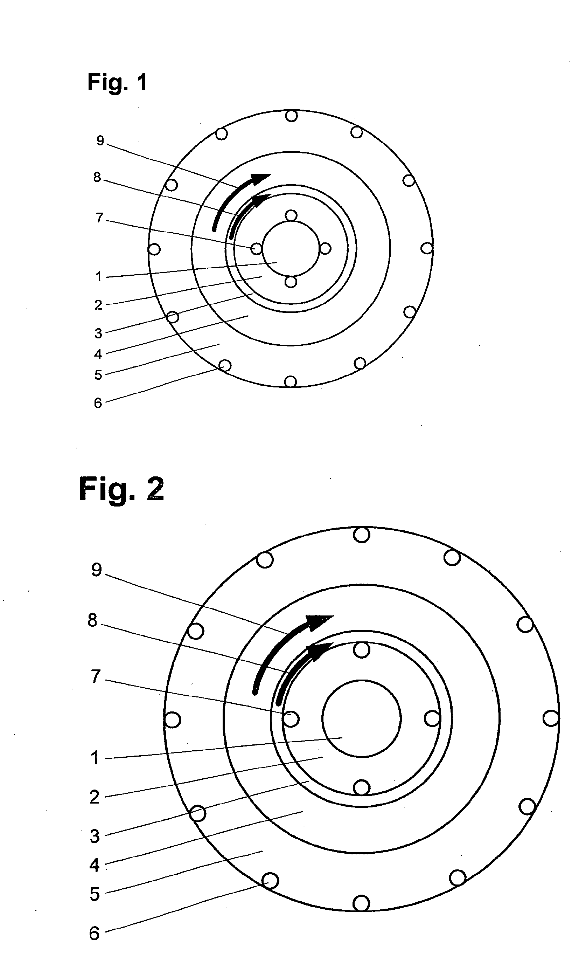

Der in Figur 1 dargestellte Brenner dient zur Verbrennung niederkalorischer Brennstoffe, beispielsweise eines Gemischs aus Holz und Kohle. Der Brenner besitzt mehrere koaxial zueinander angeordnete Rohre unterschiedlichen Durchmessers, wobei das zentrale Rohr 1 und die zwischen den Rohren sich bildenden Ringspalte 2, 3, 4, 5 als Brennstoff- bzw. Oxidationsmittelzuführung dienen. Die Rohre sind parallel zueinander ausgerichtet, so dass auch die jeweils zugeführten Ströme parallel zueinander aus dem Rohr 1 bzw. den Ringspalten 2, 3, 4, 5 austreten.

Das Rohr 1 und der Ringspalt 3 dienen zur Brennstoffzufuhr. An das zentrale Rohr 1 und den Ringkanal 3 ist eine Brennstoffquelle angeschlossen, aus der das als erste Brennstoffzuführung dienende Rohr 1 und der als zweite Brennstoffzuführung dienende Ringspalt 3 mit Brennstoff versorgt werden. Im Ringspalt 3 sind Mittel zur Erzeugung einer Drallströmung vorgesehen. Hierzu sind in dem Ringspalt 3 Strömungskanäle angebracht, die tangential gegen die Hauptströmungsrichtung, d.h. gegen die axiale Ausdehnung des Brenners bzw. des Rohres 1 und der Ringspalte 2, 3, 4, 5, geneigt sind. Auf diese Weise wird dem durch den Ringspalt 3 strömenden zweiten Brennstoffstrom eine Rotationsbewegungskomponente 8 aufgezwungen, die den zweiten Brennstoffstrom auf einer Schraubenbahn strömen lässt.

Über die Ringspalte 2, 4, 5 wird ein Oxidationsmittel zugeführt. Als Oxidationsmittel wird Luft mit Sauerstoff oder ein Gemisch aus Sauerstoff und Kohlendioxid eingesetzt. Die Zusammensetzung des Oxidationsmittels kann in Abhängigkeit von der gewünschten Brennerleistung und Flammengeometrie variiert werden.

Analog zur Verwirbelung des zweiten Brennstoffstroms sind auch in dem Ringspalt 4 geeignete Mittel zur Verdrallung des Oxidationsmittelstroms vorgesehen. Der Oxidationsmittelstrom wird durch entsprechende Einbauten, wie zum Beispiel Strömungskanäle, Leitflügel oder Leitbleche, in eine Rotationsbewegung 9 versetzt, die vorzugsweise dieselbe Drehrichtung aufweist wie die Drehbewegung 8 des zweiten Brennstoffstroms.

In dem Ringspalt 2 befinden sich 4 gleichmäßig über den äußeren Umfang des Rohres 1 verteilte Sauerstofflanzen 7. Ebenso sind entlang des inneren Umfangs des äußersten Ringspalts 5 zwölf weitere Sauerstofflanzen 6 äquidistant angeordnet. Alle Sauerstofflanzen 6, 7 sind an eine Sauerstoffquelle angeschlossen, über die die Sauerstofflanzen 6, 7 mit Sauerstoff mit einer Reinheit von mehr als 98 vol-% versorgt werden.

Die Brennstoffzufuhr erfolgt erfindungsgemäß zweigeteilt: Ein erster Teil des Brennstoffs wird über das zentrale Rohr 1 zugeführt. Der restliche Brennstoff wird über den Ringspalt 3 geleitet und dort verdrallt, d.h. mit einer zusätzlichen Rotationskomponente versehen. Das Verhältnis der über das zentrale Rohr 1 und der über den Ringspalt 3 zugeführten Brennstoffmengen beträgt vorzugsweise 2 zu 1.

Als Oxidationsmittel wird beispielsweise ein Gemisch aus Sauerstoff und Kohlendioxid eingesetzt. Dem Kohlendioxid wird hierzu von Vorteil soviel Sauerstoff zugegeben, dass der Kohlendioxidstrom einen Sauerstoffgehalt von 15 bis 25 vol.-% aufweist. Die Oxidationsmittelzufuhr wird auf die drei Ringspalte 2, 4, 5 verteilt, wobei, wie oben ausgeführt, der durch den Ringspalt 4 strömende Oxidationsmittelstrom mit einer Verdrallung beaufschlagt wird. Die Aufteilung des gesamten Oxidationsmittels auf die Ringspalte 2, 4, 5 erfolgt vorzugsweise im Verhältnis 2 zu 3 zu 5. Zusätzlich wird über die Sauerstofflanzen 6, 7 Sauerstoff eingedüst. Von Vorteil werden diese Sauerstoffströme ebenfalls verdrallt, das heißt den Sauerstoffströmen wird eine zusätzliche Rotationsbewegungskomponente aufgeprägt.

Die erfindungsgemäße Aufteilung der Brennstoff- und Oxidationsmittelzufuhr auf mehrere getrennte Zuführungen, das zentrale Rohr 1, die Ringspalte 2, 3, 4, 5 und die Sauerstofflanzen 6, 7, sowie die Verdrallung des zweiten Brennstoffstroms 3, des Oxidationsmittelstroms 4 und der eingedüsten Sauerstoffströme 6, 7 erlaubt eine optimale Verbrennungsführung. Die Flammencharakteristik kann unabhängig von der momentanen Brennerleistung eingestellt und optimiert werden. Die Flammenstabilität wird wesentlich verbessert.

Durch die Verdrallung der Ströme 3, 4, 6, 7 wird eine besonders gute Durchmischung dieser Ströme 3, 4, 6, 7 mit den benachbarten Strömen 1, 2, 5 erreicht. Insgesamt werden dadurch die Reaktionsbedingungen verbessert. Über die inneren Sauerstofflanzen 7 kann zusätzlicher Sauerstoff als Oxidationsmittel zugeführt werden, wenn beispielsweise der Sauerstoffanteil in dem über den Ringspalt 2 zugeführten Oxidationsmittel zu gering ist, um eine gleichmäßige und stabile Verbrennung zu gewährleisten.

Die Ausführung gemäß Figur 2 unterscheidet sich von der nach Figur 1 lediglich darin, dass die im Ringkanal 2 angeordneten Sauerstofflanzen 7 nicht an dessen innerem Rand, sondern am äußeren Rand des Ringkanals 2 vorgesehen sind.

## Patentansprüche

1. Verfahren zur chemischen Umsetzung eines Brennstoffs mit einem sauerstoffhaltigen Gas mittels eines außenmischenden Brenners, wobei der Brennstoff über den Brenner zugeführt und mit einem den Brennstoffstrom (1) umgebenden ersten Strom (2) eines sauerstoffhaltigen Gases umgesetzt wird, **dadurch gekennzeichnet, dass** ein zweiter Brennstoffstrom (3) vorgesehen ist, welcher den ersten sauerstoffhaltigen Strom (2) als Hüllstrom umgibt, und dass ein zweiter sauerstoffhaltiger Strom (4) vorgesehen ist, welcher den zweiten Brennstoffstrom (3) als Hüllstrom umgibt, und wobei in den ersten sauerstoffhaltigen Strom (2) zwei oder mehr zusätzliche Sauerstoffströme (7) eingedüst werden, welche ein Gas mit einem Sauerstoffgehalt von mehr als 21 vol-% liefern.

2. Verfahren nach Anspruch 1, **dadurch gekennzeichnet, dass** dem zweiten sauerstoffhaltigen Strom (4), dem zweiten Brennstoffstrom (3) und/oder den zusätzlichen Sauerstoffströmen (7) eine Drallströmung (8, 9) aufgeprägt wird.

3. Verfahren nach einem der Ansprüche 1 oder 2, **dadurch gekennzeichnet, dass** die dem zweiten sauerstoffhaltigen Strom (4) und dem zweiten Brennstoffstrom (3) aufgeprägten Drallströmungen (8, 9) gleichsinnig sind.

4. Verfahren nach einem der Ansprüche 1 bis 3, **dadurch gekennzeichnet, dass** die Strömungsgeschwindigkeit des zweiten sauerstoffhaltigen Stroms (4) die Strömungsgeschwindigkeit des zweiten Brennstoffstroms (3) um mehr als 50%, vorzugsweise um mehr 75% überschreitet, besonders bevorzugt zwischen 90% und 120% der Strömungsgeschwindigkeit des zweiten Brennstoffstroms (3) beträgt.

5. Verfahren nach einem der Ansprüche 1 bis 4, **dadurch gekennzeichnet, dass** ein flüssiger oder fester Brennstoff, insbesondere Kohle, Braunkohle oder Holz, umgesetzt wird.

6. Verfahren nach einem der Ansprüche 1 bis 5, **dadurch gekennzeichnet, dass** der erste (2) und/oder der zweite sauerstoffhaltige Strom (4) ein Gemisch aus Sauerstoff und Kohlendioxid enthalten, insbesondere aus einem Gemisch aus Sauerstoff und Kohlendioxid bestehen.

## Claims

1. Method for the chemical reaction of a fuel with an oxygen-containing gas by means of an externally mixing burner, a fuel being fed via the burner and being reacted with a first stream (2), surrounding the fuel stream (1), of an oxygen-containing gas, **characterized in that** a second fuel feed (3) is provided, which as an enveloping stream surrounds the first oxygen-containing stream (2), and **in that** a second oxygen-containing stream (4) is provided, which as an enveloping stream surrounds the second fuel stream (3), two or more additional oxygen streams (7) being injected into the first oxygen-containing stream (2), which streams deliver a gas having an oxygen content of more than 21% by volume.

2. Method according to Claim 1, **characterized in that** a swirl flow (8, 9) is imparted to the second oxygen-containing stream (4), to the second fuel stream (3) and/or to the additional oxygen streams (7).

3. Method according to either one of Claims 1 and 2, **characterized in that** the swirl flows (8, 9) imparted to the second oxygen-containing stream (4) and to the second fuel stream (3) are codirectional.

4. Method according to one of Claims 1 to 3, **characterized in that** the flow velocity of the second oxygen-containing stream (4) exceeds the flow velocity of the second fuel stream (3) by more than 50%, preferably by more than 75%, and especially preferably amounts to between 90% and 120% of the flow velocity of the second fuel stream (3).

5. Method according to one of Claims 1 to 4, **characterized in that** a liquid or solid fuel, in particular coal, lignite or wood, is reacted.

6. Method according to one of Claims 1 to 5, **characterized in that** the first (2) and/or the second (4) oxygen-containing stream contain/contains a mixture of oxygen and carbon dioxide, in particular consist/consists of a mixture of oxygen and carbon dioxide.

## Revendications

1. Procédé pour la conversion chimique d'un combustible avec un gaz contenant de l'oxygène au moyen d'un brûleur à mélange externe, dans lequel le combustible est fourni par l'intermédiaire du brûleur et est converti avec un premier courant (2) d'un gaz contenant de l'oxygène qui entoure le courant de combustible (1), **caractérisé en ce qu'**il est prévu un deuxième courant de combustible (3), qui entoure le premier courant contenant de l'oxygène (2) sous la forme d'un courant de gainage, et **en ce qu'**il est prévu un deuxième courant contenant de l'oxygène (4), qui entoure le deuxième courant de combustible (3) sous la forme d'un courant de gainage, et dans lequel deux ou plusieurs courants d'oxygène additionnels (7) sont injectés dans le premier courant contenant de l'oxygène (2), lesdits courants fournissant un gaz ayant une teneur en oxygène de plus de 21% en volume.

2. Procédé selon la revendication 1, **caractérisé en ce qu'**un écoulement tourbillonnaire (8, 9) est imposé au deuxième courant contenant de l'oxygène (4), au deuxième courant de combustible (3) et/ou aux courants d'oxygène additionnels (7).

3. Procédé selon l'une quelconque des revendications 1 ou 2, **caractérisé en ce que** les écoulements tourbillonnaires (8, 9) imposés au deuxième courant contenant de l'oxygène (4) et au deuxième courant de combustible (3) sont de même sens.

4. Procédé selon l'une quelconque des revendications 1 à 3, **caractérisé en ce que** la vitesse d'écoulement du deuxième courant contenant de l'oxygène (4) dépasse de plus de 50 %, de préférence de plus de 75 %, la vitesse d'écoulement du deuxième courant de combustible (3), et se situe de préférence encore entre 90 % et 120 % de la vitesse d'écoulement du deuxième courant de combustible (3).

5. Procédé selon l'une quelconque des revendications 1 à 4, **caractérisé en ce que** l'on convertit un combustible liquide ou solide, en particulier du charbon, du lignite ou du bois.

6. Procédé selon l'une quelconque des revendications 1 à 5, **caractérisé en ce que** le premier (2) et/ou le deuxième (4) courant(s) contenant de l'oxygène contient/contiennent un mélange d'oxygène et de dioxyde de carbone, en particulier se compose(nt) d'un mélange d'oxygène et de dioxyde de carbone.
